# EUROPÄISCHE PATENTSCHRIFT

(11) **EP 2 367 249 B1**
(45) Veröffentlichungstag und Bekanntmachung des Hinweises auf die Patenterteilung: **20.11.2013**
(21) Anmeldenummer: 11001817.3
(22) Anmeldetag: 04.03.2011
(51) Int. Cl.: H02G 3/12

(54) **Vorrichtung zur Verschiebesicherung einer Geräteeinbaudose oder sonstigen Elektroinstallationseinrichtung an einem Leitungsführungskanal**
Device for preventing a device mounting plate or other electro-installation device on a cable guidance channel from moving
Dispositif de sécurisation contre le déplacement d'un boîtier encastré pour appareils ou tout autre dispositif d'installation électrique sur un canal de guidage de conduite

(30) Priorität: 18.03.2010 DE 102010011855
(43) Veröffentlichungstag der Anmeldung: 21.09.2011
(73) Patentinhaber: Tehalit GmbH, 67716 Heltersberg (DE)
(72) Erfinder: Szabo, Thomas, 66849 Landstuhl (DE); Wagner, Ralf, 66649 Oberthal/Gronig (DE); Schwarz, Jürgen, 67705 Trippstadt (DE); Arnold, Hans-Joachim, 67706 Krickenbach (DE)
(74) Vertreter: Ziegler, Stefan Michael

(56) Entgegenhaltungen:
- WO-A2-02/37633
- DE-A1- 10 232 102

## Beschreibung

Die vorliegende Erfindung betrifft eine Vorrichtung zur Verschiebesicherung einer Geräteeinbaudose oder sonstigen Elektroinstallationseinrichtung an einem Leitungsführungskanal.

Geräteeinbaudosen der vorbezeichneten Art sind aus der EP 1 119 087 B1 bekannt, vergleichbare Einbaudosen auch aus der EP 07 33 276 B1, der DE 93 05 750 U1 oder der DE 297 22 471 U 1.

Die Montage von handelsüblichen Geräteeinbaudosen oder sonstigen Elektroinstallationseinrichtungen in einen Leitungsführungskanal ist für den Monteur sehr aufwändig. Bislang musste er zunächst die Leitungen in die Geräteeinbaudose einführen, die Leitungen konfektionieren, mit den Elektroinstallationsgeräten verbinden und schließlich die Elektroinstallationsgeräte in der Einbaudose fixieren. Anschließend wird die Geräteeinbaudose zusammen mit dem Elektroinstallationsgerät an den Leitungsführungskanal montiert. Problematisch wird es jedoch, wenn die Geräteeinbaudosen erst nach der endgültigen Kontaktierung und Fixierung der Geräte positioniert werden können, wie es beispielsweise bei einem frontrastenden Einbau der Fall ist. Die Montage der Geräteeinbaudose und das für die Positionierung notwendige Lösen sind montageaufwändig, was unbefriedigend ist.

Die in der EP 07 33 276 B1 beschriebene Geräteeinbaudose versucht die Arbeit des Elektroinstallateurs dadurch zu erleichtern, dass Teile von Boden, Seitenwand und Stirnwand der Geräteeinbaudose als nach unten wegklappbare Einheit ausgebildet ist. Diese Geräteeinbaudose bietet während der Montage eine freie Beweglichkeit der zu konfektionierenden Leitung, insbesondere auch während der Fixierung des kontaktierten Elektrogerätes in der Geräteeinbaudose. Wenn alle Teile korrekt positioniert und fixiert sind, wird das aufgeklappte Bodenteil in seine endgültige Position geschwenkt und verrastet, wobei gleichzeitig die Zugentlastung für die Leitungen hergestellt wird. Anschließend wird die Geräteeinbaudose in die Deckelhalteprofile des Kanals eingesetzt und mittels Schrauben unverrückbar fixiert. Allerdings ist diese Montageart noch einigermaßen umständlich, da der Installateur die Montageteile, wie z.B. die elektrischen Leitungen, das Installationsgerät, das Dosenunterteil und das Dosenoberteil, während der Montagearbeiten nicht am Kanal fixieren kann.

In der EP 1 119 087 B1 wird daher vorgeschlagen, dass die Haltevorrichtungen für die frontrastende Befestigung der Geräteeinbaudose am Unterteil angeformt sind, so dass der Installateur das zunächst leere Dosenunterteil am Leitungsführungskanal befestigen und anschließend die unterschiedlichen Einzelteile daran anbauen kann. Die hakenförmigen Haltevorrichtungen ermöglichen eine frontrastende Befestigung des Dosenunterteils an den entsprechenden Halteprofilen eines Leitungsführungskanals.

Neben den erwähnten Geräteeinbaudosen werden auch sonstige Elektroinstallationseinrichtungen an einem Leitungsführungskanal befestigt. Dazu gehören nicht nur die Elektroinstallationsgeräte selbst, sondern auch Blenden oder Frontrahmen, welche beispielsweise zur Abdeckung mit einer Geräteeinbaudose verrastet werden.

Nachteilig bei der in der EP 1 119 087 B1 vorgeschlagenen Lösung ist jedoch die insbesondere bei einem frontrastenden Einbau umständliche Demontage und Positionierung der Geräteeinbaudose. Durch die Verrastung der Halteprofile mit den Deckelhalteprofilen des Leitungsführungskanals ist eine Verschiebbarkeit und damit Positionierung sowie anschließende Fixierung nicht ohne Weiteres möglich. Ein nachträgliches Einlegen von Leitungen in den Leitungsführungskanal ist daher einigermaßen aufwändig.

In der DE 102 32 102 B4 wird eine Einbaudose beschrieben, bei der die Befestigung dadurch erfolgt, dass die Einbaudose in dem Aufnahmeteil eine obere Befestigungseinrichtung mit einem Klemmelement und eine untere Befestigungseinrichtung aufweist. In einer Wand der Einbaudose ist eine Rastausnehmung vorgesehen, in welche entsprechende Rastvorsprünge des Klemmelementes zu einer Verrastung führen. Dabei drückt das in der Rastausnehmung verrastete Klemmelement auf den Rand der Ausnehmung, so dass die Einbaudose mittels des verrasteten Klemmelements auf den Rand der Ausnehmung aufgeklemmt ist. Probleme bestehen jedoch bei dieser Konstruktion hinsichtlich der Einfachheit der Lösbarkeit für eine Demontage.

Vor diesem Hintergrund liegt der vorliegenden Erfindung die Aufgabe zugrunde, die bekannten Vorrichtungen zur Verschiebesicherung von Geräteeinbaudosen und sonstigen Elektroinstallationseinrichtungen an einem Leitungsführungskanal zu verbessern, um dadurch eine vereinfachte Montage- sowie Demontagemöglichkeit zu ermöglichen.

Diese Aufgabe wird gelöst durch eine Vorrichtung mit den Merkmalen des Anspruchs 1.

Die erfindungsgemäße Verschiebesicherung basiert auf einem separaten Klemmelement, welches verschiebbar in einem Installationsbauteil integriert ist und ein Verklemmen des Halterahmens mit dem Kanalunterteil bewirkt. In einer bevorzugten Ausführungsform wird auch der Geräteeinsatz mit dem Halterahmen ohne Verschraubung verrastet. Eine Montage aber auch mögliche Demontage des gesamten Gerätekomplexes wird dadurch schnell und effizient.

Die erfindungsgemäße Vorrichtung besteht aus einem üblichen Halterahmen, der eine zentrale Öffnung zum Einsatz einer Geräteeinbaudose oder einer anderen Elektroinstallationseinrichtung (wie z.B. Schalter) definiert. An dem Halterahmen sind an sich bekannte Rast- oder Klemmelemente angebracht, welche zur Befestigung der Vorrichtung an der Geräteeinbaudose oder einer sonstigen Elektroinstallationseinrichtung dienen.

Die erfindungsgemäße Vorrichtung ist dadurch gekennzeichnet, dass in wenigstens einem Rahmenelement ein separates Klemmelement verschiebbar eingebracht ist, das aus einem Grundkörper mit einem über die Rahmenoberfläche herausragenden Schieber besteht, wobei in dem Schieber wenigstens eine seitliche Ausnehmung zur Aufnahme eines Handwerkzeugs und an dem Grundkörper wenigstens eine seitliche Backe ausgebildet ist, wobei das Klemmelement derart in das Rahmenelement eingesetzt ist, dass es entlang einer an der Innenseite des Rahmenelementes ausgebildeten Führung von einer Montageposition in eine Arretierposition verschiebbar ist, wobei die an dem Grundkörper ausgebildete(n) seitliche(n) Backe(n) in der Montageposition bzw. im Auslieferungszustand auf dem Halterahmen aufliegen und das Klemmelement in der Arretierposition eine Innenleiste des Halterahmens mit einer oder mehreren Klemmnase(n) gegen die Formhalteprofile eines Kanalunterteils zur Herstellung eines Reibverschlusses drückt. Die Innenleiste ist somit ein Teil des seitlichen Rahmenelementes. Das Klemmelement bewirkt beim Herunterdrücken des Schiebers, dass letztendlich die Innenleiste mit den daran ausgebildeten Klemmnasen nach innen gegen die Formhalteprofile des Kanalunterteils gedrückt und der Geräteinsatz dadurch gehalten wird. Die Innenleiste ist vorzugsweise elastisch.

Der Klemmdruck kann je nach Ausführungsform auf unterschiedliche Art und Weise erfolgen. In einer ersten Ausführungsform wir der Klemmdruck über seitliche hervorstehende Stützflächen erreicht. Die an dem Grundkörper ausgebildete(n) seitliche(n) Backe(n) dienen dann lediglich zum Aufliegen und Halt des Klemmelementes am Rahmen für den Auslieferungszustand. In einer anderen Ausführungsform kann der Klemmdruck jedoch auch direkt über die seitlichen Backen erfolgen, mit denen die Innenleiste mit den daran ausgebildeten Klemmnasen nach innen gegen die Formhalteprofile des Kanalunterteils gedrückt wird.

Vorzugsweise wird das separate Klemmelement in dem Rahmenelement über einen Schlitz geführt. Zur Führung befindet sich außen an den Seitenflächen des Grundkörpers eine Nut, welche mit der an der Innenseite des Rahmenelementes ausgebildeten Führung kooperiert. Vorzugsweise handelt es sich bei der Führung um eine einfache Schiene oder Rille, welche entweder an dem Klemmelement selbst oder alternativ an dem Rahmen ausgebildet sein kann. Durch den erwähnten Schlitz und die stufenlose Führung in der Schiene oder Rille wird die Verschiebbarkeit des Klemmelementes relativ zu dem Rahmenelement gewährleistet.

Vorzugsweise befinden sich an dem Klemmelement zwei seitliche Rasthaken, um ein versehentliches Lösen oder Herausfallen des Klemmelementes aus der Führung zu verhindern. Die Rasthaken des Klemmelementes verhaken sich beim Herunterdrücken des Schiebers mit einem Teil des Rahmenelementes.

Vorzugsweise sind die für das Aufliegen des Klemmelementes erforderlichen Backen an Seitenflächen des Grundkörpers ausgebildet, wobei die Seitenflächen gegenüber den Endbereichen des Klemmelementes nach innen versetzt sind, um eine optimale Führung des Klemmelementes zu gewährleisten.

Bei den Formhalteprofilen handelt es sich vorzugsweise um Deckelhalteprofile eines Kanalunterteils, welche üblicherweise zur Befestigung einer Geräteeinbaudose oder einer Elektroinstallationseinrichtung verwendet werden.

Im Montagezustand (= Auslieferungszustand) wird der Halterahmen mit der erfindungsgemäßen Verschiebesicherung auf die Geräteeinbaudose oder dem Elektroinstallationsgerät aufgesetzt. Die Backen liegen in dieser Position auf dem Rahmenelement auf. Der Montagezustand ist zugleich der Auslieferungszustand. In dieser Position ist die gesamte Baueinheit entlang des Leitungsführungskanals verschiebbar und kann durch den Monteur in die gewünschte Position gebracht werden. Die Arretierung der Vorrichtung an dem Kanal erfolgt durch Herunterdrücken des Schiebers am Klemmelement beim Halterahmen. Dabei gleiten die seitlichen Backen über einen kleinen Vorsprung oder Widerstand am Rahmenelement und werden in den darin ausgebildeten Schlitz gedrückt. Beim Herunterdrücken wird eine Innenleiste des Rahmenelementes mit daran ausgebildeten Klemmnasen durch das Klemmelement gegen Formhalteprofile des Kanalunterteils gedrückt, wobei die seitlich daran angebrachten Klemmnasen mit den Formhalteprofilen des Kanalunterteils einen Reibverschluss eingehen. Diese Stellung wird als Arretierposition bezeichnet. Geräteeinsatz und Kanalunterteil sind nun fest miteinander fixiert. Die am Fußende des Klemmelementes ausgebildeten Rasthaken verhindern im Auslieferungszustand ein Herausfallen des Klemmelementes aus dem im Rahmen ausgeformten Schlitz.

Im einfachsten Fall wird das Herunterdrücken der Klemmelemente dadurch erreicht, dass die abschließende Blende nach Einsatz des Elektroeinbaugerätes in die Geräteeinbaudose einfach von oben aufgedrückt wird. Die Montage ist daher ohne Werkzeug durchführbar. Da ein Kanalunterteil typischerweise symmetrisch aufgebaut ist, d.h. links- und rechtsseitige Formhalteprofile besitzt, sind vorzugsweise zwei Klemmelemente in dem Halterahmen gegenüber angeordnet.

Für die Demontage wird das Klemmelement oder die Klemmelemente einfach nach oben gezogen. Auf diese Weise kann der gesamte Baueinheit schnell aus dem Leitungsführungskanal entfernt werden und ggf. neue Leitungen eingesetzt werden. Dies kann entweder mit der Hand oder mit einem Handwerkzeug (z.B. Schraubenzieher) durchgeführt werden, wofür die seitlichen Ausnehmungen an dem Schieber gedacht sind. Die Ausnehmungen ermöglichen das Einführen des Montagewerkzeuges zum Hochschieben des Klemmelementes.

In einer bevorzugten Ausführungsform sind am Rahmen zusätzlich gegenüberliegend angeordnete federnde Haltenasen und Klemmfüße angeordnet. Die Klemmfüße bilden einen Schlitz. Das Elektroninstallationsgerät wird von einer Seite in den Schlitz der Klemmfüße geführt und beim Verschieben durch die von unten greifenden Haltenasen im Rahmen fixiert. Der Vorteil ist darin zu sehen, dass die komplette Montage völlig frei von Montagemitteln wie Schrauben oder Werkzeugen erfolgen kann. Mit wenigen Handgriffen kann der Monteur sowohl die Geräteinbaudose sowie den Geräteeinsatz an den Kabelkanal anbringen, positionieren und schließlich fixieren.

Auch eine nachträgliche Demontage ist ohne Weiteres auf einfache und schnelle Weise möglich. Dadurch hebt sich die erfindungsgemäße Vorrichtung mit deutlichen Vorteilen gegenüber bekannten Lösungen im Stand der Technik ab.

Die erfindungsgemäße Vorrichtung eignet sich für jegliche Art von Elektroinstallationseinrichtung, welche in einen Installationskanal integriert oder eingebaut wird. Vorzugsweise handelt es sich hierbei um eine Geräteeinbaudose, insbesondere eine frontrastende Geräteeinbaudose.

Die Erfindung wird in den nachfolgenden Zeichnungen näher erläutert.

Es zeigen
- Fig. 1: eine erfindungsgemäße Vorrichtung, bestehend aus einem Halterahmen und einer erfindungsgemäßen Verschiebesicherung in Form von zwei sich gegenüberliegenden Klemmelementen,
- Fig. 2: eine Detaildarstellung eines erfindungsgemäßen Klemmelementes,
- Fig. 3: den in Fig. 1 gezeigten Halterahmen von der Unterseite,
- Fig. 4: den in einem Kanalunterteil eines Leitungsführungskanals eingesetzten Halterahmen,
- Fig. 5: eine isometrische Schnittdarstellung einer Geräteeinbaudose,

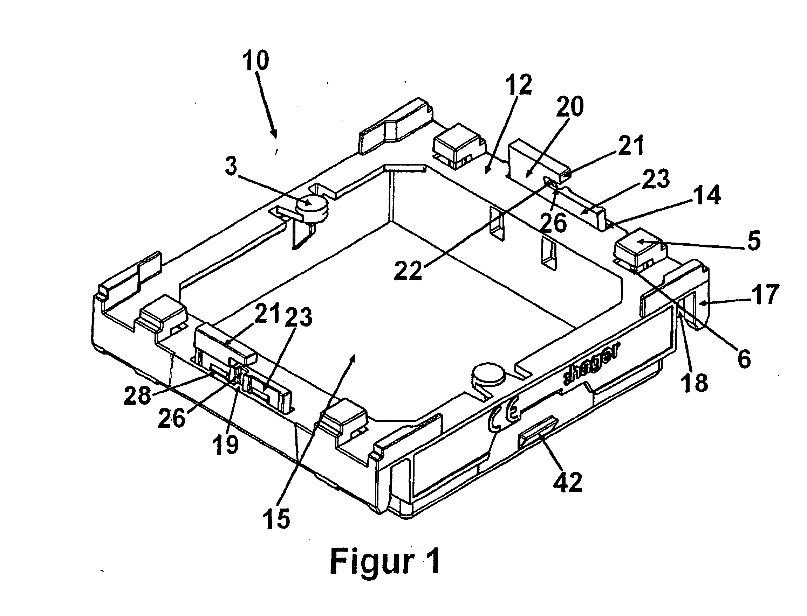

In Fig. 1 ist ein Halterahmen 10 mit einer zentralen Ausnehmung für einen Geräteeinsatz gezeigt. Der Halterahmen ist symmetrisch aufgebaut und besteht aus einzelnen umlaufenden Rahmenelementen 12. Ferner sind Rast- und Klemmelemente 42 für die Befestigung des Halterahmens 10 an einer Geräteeinbaudose (z.B. Isolierdose) vorgesehen. Der äußere Steg 17 definiert mit dem Halterahmen 10 einen Spalt 18, in dem bei der Montage das Formhalteprofil 52 des Kanalunterteils 50 geführt wird.

In den stirnseitigen Rahmenelementen 12 sind über einen Schlitz 14 zwei sich gegenüberliegende Klemmelemente 20 in das Rahmenelement 12 verschiebbar eingesetzt. Das erfindungsgemäße Klemmelement besteht aus einem Grundkörper 23 und einem an der Kopfseite ausgebildeten Schieber 21, welcher in der Montageposition über die Rahmenoberfläche des Rahmenelementes 12 herausragt. In dem Schieber 21 ist eine seitliche Ausnehmung 22 eingearbeitet, welche zur Aufnahme eines Montagewerkzeuges dient. Die Ausnehmung 22 kann natürlich auch als Greifprofil für eine Demontage per Hand genutzt werden.

Zur Führung der Klemmelemente 20 in dem Halterahmen 10 dient eine Schiene 19 sowie eine damit kooperierende Nut 26, welche an dem Grundkörper 23 des Klemmelementes 20 ausgebildet ist. Das Klemmelement 20 kann dadurch von oben nach unten geschoben werden.

Am Klemmelement 20 sind ferner Backen 28 ausgebildet, welche im Auslieferungszustand verhindern, dass das Klemmelement in den Schlitz 14 fällt und in einer bevorzugten Ausführungsform auch selbst einen Reibverschluss zwischen dem Halterahmen 10 und dem Formhalteprofil 52 des Kanalunterteils 50 bewirken können. Zur Demontage wird das Klemmelement 20 über den Schieber 21 einfach nach oben gedrückt, der Reibverschluss wird aufgehoben und die Baueinheit zur Neu-Positionierung oder Demontage freigegeben.

Ferner sind am Halterahmen 10 jeweils zwei Klemmfüße 5 zu erkennen, welche gegenüberliegend an den Rahmenelementen 12 angeordnet sind. Auf den beiden anderen Seiten des Halterahmens 10 sind zwei sich gegenüberliegend angeordnete Haltenasen 3 zu erkennen. Das Elektroinstallationsgerät (z.B. Schalter) wird zunächst in den Schlitz 6 der Klemmfüße 5 eingesetzt und dann seitlich verschoben, wodurch die Haltenasen 3 nach unten gedrückt werden. Beim Verschieben rasten die Haltenasen 3 in die entsprechenden Öffnungen des Elektroinstallationsgerätes von unten ein und fixieren dieses. Zum Lösen werden die Haltenasen 3 nach unten gedrückt und das Elektroinstallationsgerät freigegeben. Die Montage erfolgt ohne Werkzeug und benötigt keine Verbindungseinrichtungen wie z.B. Schrauben.

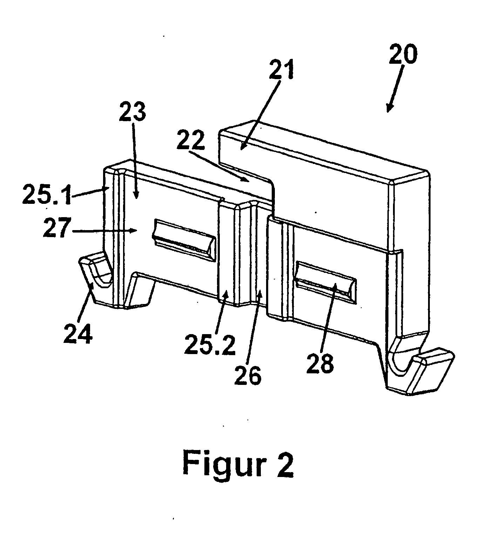

In Fig. 2 ist eine Detaildarstellung des erfindungsgemäßen Klemmelementes 20 gezeigt. In der gezeigten Ausführungsform besteht dieses aus einem Grundkörper 23 sowie dem bereits erwähnten Schieber 21, in dem eine seitliche Ausnehmung 22 zum Lösen des Klemmelementes 20 mit einem Werkzeug (z.B. Schraubendreher) eingearbeitet ist. Die Backen 28 befinden sich an den Seiteninnenflächen 27 des Grundkörpers 23 und liegen im Auslieferungszustand auf dem Halterahmen 10 auf, wodurch sie ein Hereinfallen des Klemmelementes 20 verhindern. Zur Gewährleistung der Führung ist eine Nut 26 eingearbeitet. Ferner ist die Seitenfläche 27 gegenüber den Stützflächen 25.1, 25.2 nach innen versetzt. Auf diese Weise wird eine stufenlose Führung des Klemmelementes 20 in dem Halterahmen 10 gewährleistet.

Ferner erkennt man in Fig. 2 die beiden seitlichen Rasthaken 24, welche beim Herunterdrücken des Schiebers 21 mit dem Halterahmen 10 verrasten und ein versehentliches Lösen verhindern.

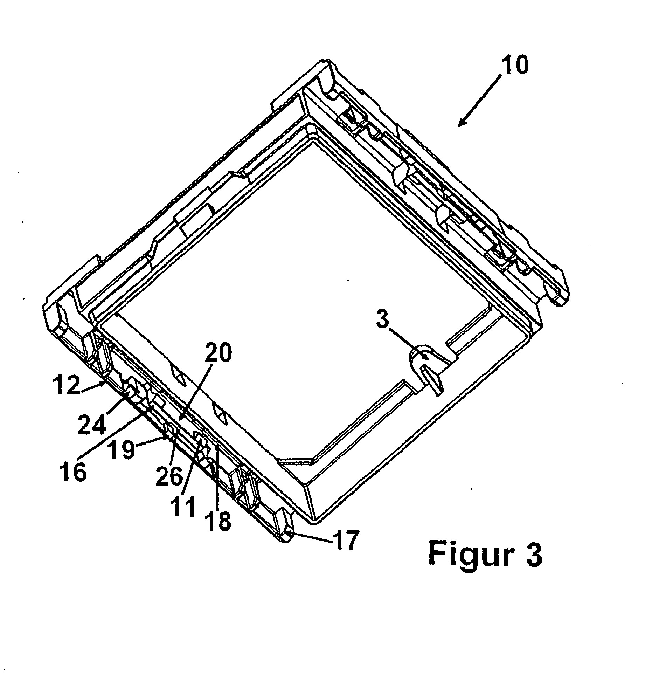

In Fig. 3 ist der bereits erwähnte Halterahmen 10 von der Unterseite gezeigt. Die Formhalteprofile 52 eines Kanalunterteils 50 werden in der Ausnehmung 18 geführt und von Halteeinrichtungen 17 gehalten. Zur Arretierung des Halterahmens 10 wird das Klemmelement 20 nach unten gedrückt, wodurch die Klemmnasen 11, welche an der Innenleiste 16 des Stegs 17 ausgebildet sind, gegen die Formhalteprofile 52 des Kanalunterteils 50 gedrückt werden und einen Reibverschluss eingehen. Die Verschiebbarkeit des Klemmelementes 20 wird über eine an der Innenseite des Rahmenelementes 12 ausgebildete Führung 19, hier gezeigt als Schiene, sowie eine dazu passende Nut 26 am Klemmelement 20 gewährleistet. Die Rasthaken 24 verrasten mit der Geräteinbaudose.

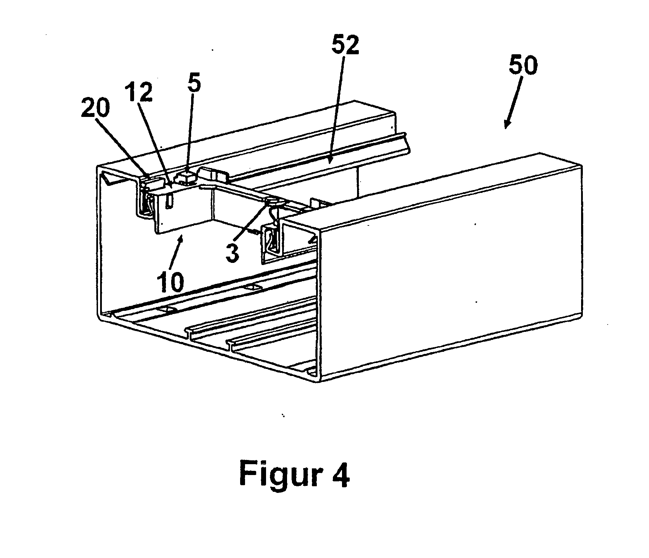

In Fig. 4 ist der Arretierzustand der erfindungsgemäßen Vorrichtung gezeigt. Der Halterahmen 10 ist in die entsprechenden Formhalteprofile 52 eines Kanalunterteils 50 eingesetzt. Solange sich das Klemmelement 20 in der Montageposition befindet, kann der Halterahmen 10 entlang der Formhalteprofile 52 seitlich verschoben werden. Zur Arretierung wird das Klemmelement 20 nach unten gedrückt, so dass, je nach Ausführungsform, entweder die Stützflächen 25.1, 25.2 oder die Backen 28 gegen die Innenseiten des Halterahmens 10 gepresst werden. Die Klemmnasen 11 bewirken letztendlich einen Reibverschluss mit dem Formhalteprofil 52 des Kanalunterteils 50, wodurch der Halterahmen 10 fixiert wird.

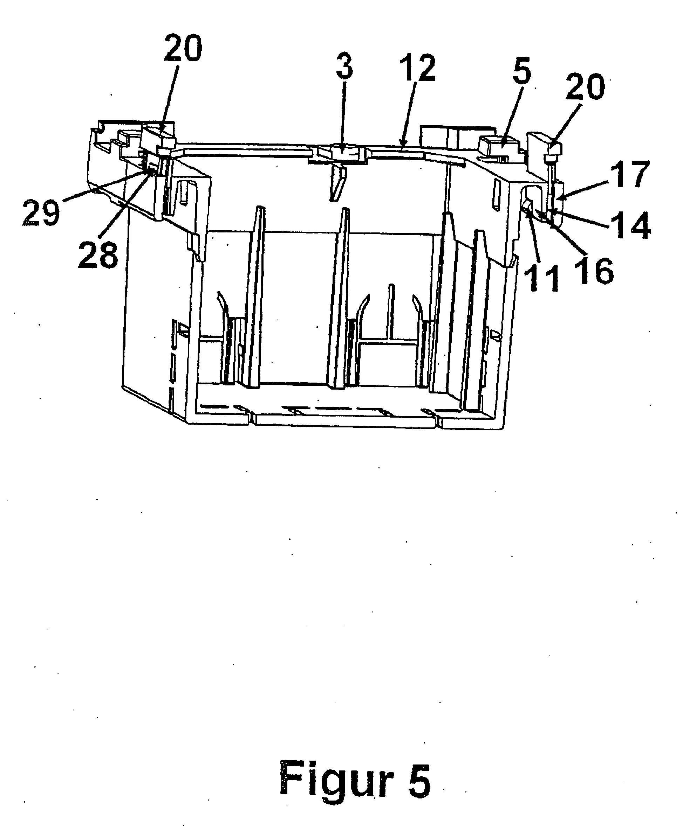

In Fig. 5 sind die einzelnen Elemente und die Funktion der erfindungsgemäßen Vorrichtung in einer Schnittdarstellung gezeigt. In der rechten Hälfte der Abbildung erkennt man den Steg 17 sowie das in dem Schlitz 14 eingefügte Klemmelement 20. An der Innenleiste 16 des Halterahmens 10 ist eine Klemmnase 11 zu erkennen. Beim Herunterdrücken des Klemmelements 20 gleiten die Backen 28 über einen kleinen Vorsprung 29 am Rahmenelement 12. Je nach Ausführungsform drücken entweder die Stützflächen 25.1, 25.2 oder die Backen 28 die Klemmnasen 11 der Innenleiste 16 nach innen gegen die Formhalteprofile 52 des Kanalunterteils 50 und bewirken den Reibverschluss.

Der Halterahmen 10 wird auf eine Isolierdose aufgesetzt. Über seitliche Rast- und Klemmelemente 42 wird der Halterahmen 10 mit der Isolierdose verrastet.

Solange sich das Klemmelement 20 in der Montageposition (= Auslieferungszustand) befindet, kann die gesamte Baueinheit entlang des Leitungsführungskanals verschoben werden. Zur Fixierung wird der Schieber 21 des Klemmelementes 20 nach unten gedrückt. Die Formhalteprofile 52 des Kanalunterteils 50 greifen in die entsprechenden Ausnehmungen 18 des Halterahmens 10. Zur Demontage wird der Schieber 21 nach oben gedrückt, wodurch der Reibverschluss der Stützflächen 25.1, 25.2, oder, je nach Ausführungsform, der Backen 28 freigegeben wird.

## Patentansprüche

1. Vorrichtung zur Verschiebesicherung einer Geräteinbaudose oder sonstigen Elektroinstallationseinrichtung (40) an einem Leitungsführungskanal, umfassend
- einen Halterahmen (10), der eine zentrale Öffnung (15) zum Einsatz der Geräteeinbaudose oder sonstigen Elektroinstallationseinrichtung (40) definiert,
- an dem Halterahmen (10) angebrachte Rast- oder Klemmelemente (42), die zur Befestigung der Vorrichtung mit der Geräteeinbaudose oder sonstigen Elektroinstallationseinrichtung kooperieren,
**dadurch gekennzeichnet, dass** in wenigstens einem Rahmenelement (12) ein separates Klemmelement (20) verschiebbar eingebracht ist, das aus einem Grundkörper (23) mit einem in der Montageposition über der Rahmenoberfläche hervortretenden Schieber (21) besteht, wobei in dem Schieber (21) wenigstens eine seitliche Ausnehmung (22) zur Aufnahme eines Handwerkzeuges und an dem Grundkörper (23) wenigstens eine seitliche Backe (28) ausgebildet ist, wobei das Klemmelement (20) derart in das Rahmenelement (12) eingesetzt ist, dass es entlang einer an der Innenseite des Rahmenelementes (12) ausgebildeten Führung (19) von einer Montageposition in eine Arretierposition verschiebbar ist, wobei die Backe(n) (28) in der Montageposition auf dem Halterahmen (10) aufliegen und das Klemmelement (20) in der Arretierposition eine Innenleiste (16) des Halterahmens (10) mit einer oder mehreren daran ausgebildeten Klemmnase(n) (11) gegen die Formhalteprofile (52) eines Kanalunterteils (50) zur Herstellung eines Reibverschlusses drückt.

2. Vorrichtung nach Anspruch 1, **dadurch gekennzeichnet, dass** das Klemmelement (20) in einem am Rahmenelement (12) ausgebildeten Schlitz (14) verschiebbar eingesetzt ist.

3. Vorrichtung nach Anspruch 1 oder 2, **dadurch gekennzeichnet, dass** an dem Klemmelement (20) am Fußende zwei seitliche Rasthaken (24) ausgebildet sind.

4. Vorrichtung nach Anspruch 3, **dadurch gekennzeichnet, dass** an den Seitenflächen (27) des Grundkörpers (23) eine Nut (26) ausgebildet ist, welche mit der Führung (19) am Halterahmen (10) kooperiert.

5. Vorrichtung nach einem der vorhergehenden Ansprüche, **dadurch gekennzeichnet, dass** es sich bei der an der Innenseite des Rahmenelementes (12) ausgebildeten Führung (19) um eine Schiene handelt.

6. Vorrichtung nach einem der vorhergehenden Ansprüche, **dadurch gekennzeichnet, dass** die Seitenflächen (27) des Klemmelementes (20) gegenüber Stützflächen (25) des Klemmelementes (20) nach innen versetzt sind.

7. Vorrichtung nach einem der vorhergehenden Ansprüche, **dadurch gekennzeichnet, dass** es sich bei den Formhalteprofilen (52) um Deckelhalteprofile eines Kanalunterteils (50) handelt.

8. Vorrichtung nach einem der vorhergehenden Ansprüche, **dadurch gekennzeichnet, dass** die Klemmnasen (11) in der Arretierposition zur Kanalmitte orientiert sind und mit der Innenseite des Formhalteprofils (52) des Kanalunterteils (50) kooperieren.

9. Vorrichtung nach einem der vorhergehenden Ansprüche, **dadurch gekennzeichnet, dass** an dem Halterahmen (10) zusätzlich Klemmfüße (5), welche einen Spalt (6) bilden, sowie Haltenasen (3) ausgebildet sind, welche das eingesetzte Elektroinstallationsgerät von unten lösbar verrasten.

10. Vorrichtung nach einem der vorhergehenden Ansprüche, **dadurch gekennzeichnet, dass** der Klemmdruck zur Herstellung eines Reibverschlusses entweder durch an dem Grundkörper (23) des Klemmelementes (20) ausgebildete seitliche Stützflächen (25.1, 25.2) oder durch die an dem Grundkörper (23) ausgebildeten Backen (28) erzeugt wird.

## Claims

1. Apparatus for preventing an appliance flush-mounting box or other electrical installation device (40) on a line guidance duct from moving, comprising
- a holding frame (10) which defines a central opening (15) for inserting the appliance flush-mounting box or other electrical installation device (40),
- latching or clamping elements (42) which are attached to the holding frame (10) and cooperate with the appliance flush-mounting box or other electrical installation device in order to secure the apparatus,
**characterized in that** a separate clamping element (20) is movably inserted into at least one frame element (12), the said clamping element comprising a main body (23) with a slide (21) which projects beyond the frame surface in the assembly position, wherein at least one lateral recess (22) for receiving a hand-held tool is formed in the slide (21) and at least one lateral jaw (28) is formed on the main body (23), wherein the clamping element (20) is inserted into the frame element (12) in such a way that it can be moved from an assembly position into a locked position along a guide (19), which is formed on the inner face of the frame element (12), wherein the jaw or jaws (28) rest on the holding frame (10) in the assembly position and the clamping element (20) presses an internal bar (16) of the holding frame (10) with one or more clamping lugs (11) formed on it against the shaped holding profile (52) of a duct lower part (50) for establishing a frictional connection.

2. Apparatus according to Claim 1, **characterized in that** the clamping element (20) is inserted into a slot (14), which is formed on the frame element (12), such that it can move.

3. Apparatus according to Claim 1 or 2, **characterized in that** two lateral latching hooks (24) are formed on the clamping element (20) at the foot end.

4. Apparatus according to Claim 3, **characterized in that** a groove (26) is formed on the side faces (27) of the main body (23), the said groove cooperating with the guide (19) on the holding frame (10).

5. Apparatus according to one of the preceding claims, **characterized in that** the guide (19) which is formed on the inner face of the frame element (12) is a rail.

6. Apparatus according to one of the preceding claims, **characterized in that** the side faces (27) of the clamping element (20) are offset in the inward direction in relation to supporting faces (25) of the clamping element (20).

7. Apparatus according to one of the preceding claims, **characterized in that** the shaped holding profiles (52) are cover holding profiles of a duct lower part (50).

8. Apparatus according to one of the preceding claims, **characterized in that** the clamping lugs (11) are oriented towards the centre of the duct in the locking position and cooperate with the inner face of the shaped holding profile (52) of the duct lower part (50).

9. Apparatus according to one of the preceding claims, **characterized in that** additional clamping feet (5), which form a gap (6), and holding lugs (3), which releasably latch the inserted electrical installation appliance from below, are formed on the holding frame (10).

10. Apparatus according to one of the preceding claims, **characterized in that** the clamping pressure for establishing a frictional connection is generated either by lateral supporting faces (25.1, 25.2) which are formed on the main body (23) of the clamping element (20) or by the jaws (28) which are formed on the main body (23).

## Revendications

1. Dispositif pour empêcher le déplacement ou coulissement d'un boîtier d'appareil encastrable ou autre équipement d'installation électrique (40) sur un caniveau de câblage, comprenant
- un cadre de maintien (10), qui définit une ouverture centrale (15) pour l'insertion du boîtier d'appareil encastrable ou autre équipement d'installation électrique (40),
- des éléments d'enclenchement ou de serrage (42) installés sur le cadre de maintien (10), qui coopèrent pour la fixation du dispositif avec le boîtier d'appareil encastrable ou autre équipement d'installation électrique,
**caractérisé en ce qu'**un élément de serrage séparé (20) est mis en place à coulissement dans au moins un élément de cadre (12) et est constitué d'un corps de base (23) avec un coulisseau (21) dépassant de la surface du cadre dans la position de montage, sachant qu'au moins un évidement latéral (22) est formé dans le coulisseau (21) pour recevoir un outil à main et qu'au moins un mors latéral (28) est formé sur le corps de base (23), sachant que l'élément de serrage (20) est inséré dans l'élément de cadre (12) de telle sorte qu'il peut coulisser d'une position de montage dans une position de blocage le long d'un guide (19) formé sur le côté intérieur de l'élément de cadre (12), sachant que le ou les mors (28) reposent sur le cadre de maintien (10) dans la position de montage et que l'élément de serrage (20), dans la position de blocage, presse une bordure intérieure (16) du cadre de maintien (10), sur laquelle sont formés un ou plusieurs ergots ou "nez" de serrage (11), contre les profilés de maintien de forme (52) d'une partie inférieure de caniveau (50) afin de réaliser un verrouillage par friction.

2. Dispositif selon la revendication 1, **caractérisé en ce que** l'élément de serrage (20) est inséré à coulissement dans une fente (14) formée sur l'élément de cadre (12).

3. Dispositif selon la revendication 1 ou 2, **caractérisé en ce que** deux crochets d'enclenchement latéraux (24) sont formés sur l'élément de serrage (20) à l'extrémité de pied.

4. Dispositif selon la revendication 3, **caractérisé en ce qu'**une rainure (26) est formée sur les faces latérales (27) du corps de base (23), rainure qui coopère avec le guide (19) formé sur le cadre de maintien (10).

5. Dispositif selon l'une des revendications précédentes, **caractérisé en ce que** le guide (19) formé sur le côté intérieur de l'élément de cadre (12) est un rail.

6. Dispositif selon l'une des revendications précédentes, **caractérisé en ce que** les faces latérales (27) de l'élément de serrage (20) sont en déport ou décalage vers l'intérieur par rapport à des faces d'appui (25) de l'élément de serrage (20).

7. Dispositif selon l'une des revendications précédentes, **caractérisé en ce que** les profilés de maintien de forme (52) sont des profilés de maintien de couvercle d'une partie inférieure de caniveau (50)

8. Dispositif selon l'une des revendications précédentes, **caractérisé en ce que** les ergots ou "nez" de serrage (11), dans la position de blocage, sont orientés vers le milieu du caniveau et coopèrent avec le côté intérieur du profilé de maintien de forme (52) de la partie inférieure de caniveau (50).

9. Dispositif selon l'une des revendications précédentes, **caractérisé en ce que** des pieds de serrage (5), qui forment un interstice (6), ainsi que des ergots ou "nez" de maintien (3), par lesquels l'appareil d'installation électrique inséré est lié de manière amovible par enclenchement par le bas, sont en outre formés sur le cadre de maintien (10).

10. Dispositif selon l'une des revendications précédentes, **caractérisé en ce que** la pression de serrage pour réaliser un verrouillage par friction est produite soit par des faces d'appui latérales (25.1, 25.2) formées sur le corps de base (23) de l'élément de serrage (20), soit par les mors (28) formés sur le corps de base (23).
